# EUROPÄISCHE PATENTSCHRIFT

(11) **EP 1 854 768 B1**
(45) Veröffentlichungstag und Bekanntmachung des Hinweises auf die Patenterteilung: **04.08.2010**
(21) Anmeldenummer: 07107684.8
(22) Anmeldetag: 08.05.2007
(51) Int. Cl.: C03B 19/14, C03B 37/014

(54) **Verfahren zur herstellung von synthetischem quarzglas mit vorgegebenem hydroxylgruppengehalt**
Method for producing synthetic quartz glass with predetermined hydroxyl group content
Méthode de production de verre de quartz synthétique avec un taux d' hydroxyl prédéfini

(30) Priorität: 11.05.2006 DE 102006022303
(43) Veröffentlichungstag der Anmeldung: 14.11.2007
(73) Patentinhaber: Heraeus Quarzglas GmbH & Co. KG, 63450 Hanau (DE)
(72) Erfinder: Kuehn, Bodo, 63571, Gelnhausen (DE); Ochs, Stefan, 65520, Bad Camberg (DE)
(74) Vertreter: Staudt, Armin Walter

(56) Entgegenhaltungen:
- DE-A1- 19 649 935
- US-A- 5 043 002
- US-A1- 2005 011 228
- US-A1- 2005 187 092

## Beschreibung

Die vorliegende Erfindung betrifft ein Verfahren zur Herstellung von synthetischem Quarzglas mit vorgegebenem Hydroxylgruppengehalt, umfassend die folgenden Verfahrensschritte
(a) durch Flammenhydrolyse oder Oxidation einer siliziumhaltigen Ausgangsverbindung und schichtweises Abscheiden von SiO₂-Partikeln auf einem rotierenden Träger wird ein poröser SiO₂-Sootkörper hergestellt,
(b) der Sootkörper wird zum Entfernen von Hydroxylgruppen einer Dehydratationsbehandlung in einer ein Reaktionsgas enthaltenden Trocknungsatmosphäre bei einer Trocknungstemperatur unterzogen, und
(c) der SiO₂-Sootkörper wird zu einem Körper aus dem synthetischen Quarzglas verglast.

Aus synthetischem Quarzglas werden beispielsweise optische Bauteile für die Mikrolithographie oder Vorformen für optische Fasern hergestellt.

Bei dem Sootkörper handelt es sich um einen Hohlzylinder oder um einen Vollzylinder aus porösem SiO₂-Ruß, der nach dem bekannten VAD-Verfahren (Vapor Axial Deposition) oder nach dem OVD-Verfahren (Outside Vapor Deposition) erhalten wird. In der Regel enthalten Sootkörper herstellungsbedingt einen hohen Gehalt an Hydroxylgruppen (OH-Gruppen). Diese wirken sich auf die optische Transmission des daraus erhaltenen Quarzglases aus - typische OH-Absorptionsbanden liegen beispielsweise bei Wellenlängen von 2,72 µm, 2,21 µm und 1,38 pm - und sie haben Einfluss auf die Beständigkeit von Quarzglas gegenüber kurzwelliger UV-Strahlung, zum Beispiel auf die als "Kompaktierung" und "Dekompaktierung" bekannten Schädigungsmuster.

Daher wird bei der Herstellung des Quarzglases im Allgemeinen auf die Einhaltung eines vorgegebenen Gehalts an Hydroxylgruppen besonders geachtet, und es sind eine Vielzahl von Methoden vorgeschlagen geworden, den Hydroxylgruppengehalt zu minimieren oder auf einen vorgegebenen Wert einzustellen.

Beispielsweise wird in der DE 196 49 935 A1 ein Verfahren zur Herstellung einer Vorform für optische Fasern beschrieben, bei dem als Zwischenprodukt ein hohlzylindrischer Sootkörper vorliegt, der nach dem "OVD-Verfahren" hergestellt wird. Dabei werden feine SiO₂-Partikel durch Flammenhydrolyse von SiCl₄ gebildet und mittels Abscheidebrenner schichtweise auf einem um seine Längsachse rotierenden Trägerrohr abgeschieden. Infolge dieser Herstellungsweise enthält der Sootkörper einen hohen Gehalt an Hydroxylgruppen. Um diese zu entfernen, wird der poröse Rohling einer Dehydratationsbehandlung unterzogen, bei der er in einem Dehydratationsofen einer chlorhaltigen Atmosphäre bei hoher Temperatur um 1000°C ausgesetzt wird. Dabei kommt es zu einer Substitution von OH-Gruppen durch Chlor. Anschließend wird der so behandelte Sootkörper in einen evakuierbaren Verglasungsofen eingebracht und darin unter Bildung eines transparenten Quarzglaszylinders verglast, der als Halbzeug für die Herstellung einer optischen Vorform eingesetzt wird.

In der Regel enthält das so hergestellte synthetische Quarzglas einen gewissen Anteil an Chlor. Es ist jedoch bekannt, dass Chlor (ähnlich wie Fluor) eine Verschlechterung der UV-Strahlenbeständigkeit des Quarzglases bewirken kann. Insbesondere bewirkt Chlor eine Verschlechterung des Kompaktierungsverhaltens und es trägt zu einer induzierten Doppelbrechung unter UV-Laserstrahlung bei. Das als "Kompaktierung" bekannte Schädigungsmuster tritt während oder nach Laserbestrahlung mit hoher Energiedichte auf und äußerst sich in einer lokalen Dichteerhöhung des Glases im durchstrahlten Volumen, die wiederum zu einem lokal inhomogenen Anstieg des Brechungsindex und damit zu einer Verschlechterung der Abbildungseigenschaften des optischen Bauteils führt.

Es sind daher Maßnahmen zur Beseitigung von Chlor aus dem porösen Sootkörper vorgeschlagen worden, wie zum Beispiel in der US 2005/0187092. Darin geht es um synthetisches Quarzglases mit hoher UV-Strahlenbeständigkeit für Linsen, Prismen und andere optische Komponenten für ein Lithographiegerät. Zur Herstellung des Quarzglases wird eine chlorfreie siliziumhaltige Ausgangsverbindung eingesetzt, aus der SiO₂-Partikel durch Flammenhydrolyse erzeugt und unter Bildung eines SiO₂-Sootkörpers auf einem Träger abgeschieden werden. Dieser wird einer Dehydratationsbehandlung unterzogen, bei der der Sootkörper bei einer Temperatur von 1050 °C in einer Atmosphäre aus Helium mit 2,7 % Chlor über einen Zeitraum von 4 h behandelt wird. Die Chlorbehandlung trägt zwar zum Entfernen von Verunreinigungen und zur Reduzierung des Hydroxylgruppengehalts bei, führt aber zwangsläufig zu einer Beladung des Sootkörpers mit Chlor. Anschließend wird SiO₂-Sootkörper in einer Zwischenbehandlung in einer Atmosphäre aus Helium mit 3 % Sauerstoff behandelt und dabei über mehrere Stunden langsam auf eine Temperatur von 1490 °C erhitzt und zu einem transparenten Quarzglaskörper gesintert, dessen Hydroxylgruppengehalt etwa 10 Gew.-ppm beträgt.

Die Zwischenbehandlung unter He/O₂-Atmosphare dient dazu, Chlor aus dem Sootkörper zu entfernen. Als alternative Reaktanten für die Chlorentfernung aus synthetischem Quarzglas werden H₂O und fluor- oder borhaltige Substanzen genannt.

Das Entfernen von Chlor aus dem Sootkörper beruht hier auf Stofftransportvorgängen (Ein- und Ausdiffusion) und auf chemischen Reaktionen. Diese Vorgänge sind zeit- und temperaturabhängig. Ein vollständiges Entfernen von Chlor aus einem Sootkörper ist daher insbesondere bei großen Soot-Wandstärken langwierig und teuer und es besteht die Gefahr, dass Chlorreste im Sootkörper verbleiben, zumal eine quantitative Analyse bei geringen Chlorgehalten schwierig ist. Chlorreste können zu Qualitätseinbußen führen, die erst in einem späteren Verfahrensstadium oder beim Einsatz des Quarzglases erkannt werden.

Die US 20051011228 A1 beschreibt ein Pressformverfahren zur Herstellung optischer Bauteile aus Phophatgläsem auf Basis von P₂O₅, die außerdem WO₃ und Nb₂O₃ enthalten. Zum Entfernen einer Färbung des Phophatglases wird eine Behandlung in oxidierender Atmosphäre empfohlen, die beispielsweise Ozon enthalten kann.

Die US 5,043,002 A beschreibt ein Verfahren zur Herstellung von synthetischem Quarzglas durch Oxidation oder Flammenhydrolyse einer Ausgangssubstanz in Form von Siloxanen. Als Stand der Technik wird die übliche Herstellung von synthetischem Quarzglas unter Einsatz von SiCl₄ als Ausgangssubstanz erwähnt, wobei als Oxidationsmittel auch Ozon in Betracht kommt.

Der Erfindung liegt daher die Aufgabe zugrunde, ein Verfahren anzugeben, das eine reproduzierbare und verlässliche Herstellung von synthetischem, UV-Strahlenbeständigem Quarzglas mit vorgegebenem Hydroxylgruppengehalt und geringem Chlorgehalt ermöglicht.

Diese Aufgabe wird ausgehend von dem eingangs genannten Verfahren erfindungsgemäß dadurch gelöst, dass die Dehydratationsbehandlung gemäß Verfahrensschritt (b) eine Trocknungsphase umfasst, während der als Reaktionsgas Ozon eingesetzt wird, und dass der Ozongehalt der Trocknungsatmosphäre zwischen 0,5 und 10 Vol.-% beträgt, wobei der Trocknungsatmosphäre keine Halogene zugeführt werden und die Trocknungstemperatur im Bereich zwischen 1200 °C und 1400 °C liegt.

Es hat sich gezeigt, dass Ozon (O₃) die Beseitigung von Hydroxylgruppen aus Quarzglas bei hohen Temperaturen unterstützen kann, denn Ozonmoleküle zeigen gegenüber Hydroxylgruppen bei hohen Temperaturen eine hinreichende Reaktivität und sind dazu geeignet, Hydroxylgruppen aus dem SiO₂-Sootkörper zu verdrängen. Daher kann durch den Einsatz von Ozon in Verbindung mit einer hohen Trocknungstemperatur ein vorgegebener Hydroxylgruppengehalt in Quarzglas auch ohne den Einsatz von Chlor oder anderer Halogene eingestellt werden. Dadurch ergeben sich folgende Vorteile:
(1) Die mit dem Chloreinsatz und dem damit einhergehenden Restchlor im SiO₂-Netzwerk verbundenen Nachteile hinsichtlich einer durch UV-Strahlung induzierten Doppelbrechung und Kompaktierung des Quarzglases werden verlässlich und reproduzierbar vermieden.
(2) Die Gefahr der Ausbildung von Sauerstofffehlstellen während der Trocknungsphase besteht nicht, denn Ozon ist aufgrund seiner oxidativen Wirkung geeignet, Sauerstofffehlstellen abzusättigen, die infolge der thermisch induzierten Abspaltung von OH-Gruppen aus einer Silanolgruppe (Si-OH) entstehen, so dass sich aus einer derartigen Sauerstofffehlstelle unmittelbar oder in einem späteren Verfahrensstadium eine Siloxanbrücke (Si-O-Si) ausbilden kann, die einen Bestandteil des fehlerfreien Glasnetzwerks darstellt.
(3) Da auf den Chloreinsatz zur Dehydratation vollständig verzichtet werden kann, erübrigt sich darüber hinaus auch eine zeitaufwändige und kostenintensive Beseitigung von Restchlor aus dem Sootkörper durch physikalische (Diffusion) und chemische Vorgänge (Reaktionen) wie beim oben beschriebenen bekannten Verfahren, zumal die vollständige Beseitigung von Chlor aus dem SiO₂-Soot quantitativ auch kaum verlässlich nachgewiesen werden kann.

Die Trockungstemperatur spielt eine entscheidende Rolle für die Effizienz des Trocknungsprozesses. Je höher die Trocknungstemperatur gewählt wird, um so wirksamer ist die durch Ozon unterstützte Trocknung des Sootkörpers. Dem wirkt allerdings der Effekt entgegen, dass bei hohen Temperaturen (oberhalb von 1150°C) ein Sintern des SiO₂-Sootkörpers einsetzt, das zu einer Verdichtung und damit einhergehend zu einer Verlangsamung der Trocknungsreaktion führt. Für das erfindungsgemäße Verfahren wurde ein Optimum im Hinblick auf eine möglichst kurze Trocknungsdauer gefunden, wenn die Trocknungstemperatur mindestens 1200 °C und maxaimal 1400°C beträgt.

Unter der Trocknungstemperatur wird hier die auf der Oberfläche des Sootkörpers mittels Pyrometer gemessene Temperatur verstanden.

Der Ozon-Gehalt in der Trocknungsatmosphäre liegt zwischen 0,5 und 10 Vol.-%. Als Ozongehalt wird hierbei derjenige Gehalt an Ozon in der Ofenatmosphäre verstanden, wie er sich rechnerisch aufgrund der in die Trocknungsatmosphäre eingespeisten Ozonmenge ergibt. Bei Ozongehalten unterhalb der Untergrenze von 0,5 Vol.-% zeigt sich eine geringe Wirkung hinsichtlich Trocknungsunterstützung und Vermeidung von Sauerstofffehlstellen. Andererseits erhöhen hohe Ozongehalte von mehr als 10 Vol.-% in der Ofenatmosphäre die physikalische und chemische Löslichkeit von Sauerstoff im Sootkörper, was in nachfolgenden Verfahrensschritten zu Blasenbildung oder zu Defekten in der Netzwerkstruktur des Quarzglases führen kann, wie etwa zu Peroxid-Defekten (Si-O-O-Si), die zu zusätzlicher optischer Absorption oder einer Verschlechterung der UV-Strahlenbeständigkeit beitragen.

Die Dehydratationsbehandlung umfasst eine Trocknungsphase unter Einsatz eines Reaktionsgases in Form von Ozon. Darüber hinaus kann die Dehydratationsbehandlung auch andere Trocknungsmaßnahmen beinhalten, zum Beispiel eine Behandlung des Sootkörpers unter Unterdruck. In jedem werden der Trocknungsatmo sphäre während der gesamten Dehydratationsbehandlung aber keine Halogene zugeführt, um die mit Halogenen einhergehenden und oben erläuterten Nachteile hinsichtlich der Beeinträchtigung der UV-Strahlenbeständigkeit zu vermeiden.

Das nach dem erfindungsgemäßen Verfahren erhaltene Quarzglas zeigt einen vorgegebenen Hydroxylgruppengehalt, der auch niedrig sein kann (bis in den Gew.-ppb-Bereich), bei gleichzeitig reproduzierbar geringem Chlorgehalt, der auch unterhalb der Nachweisgrenze liegen kann. Das so hergestellte Quarzglas zeichnet sich außerdem durch eine hohe UV-Strahlenbeständigkeit, insbesondere im Hinblick auf induzierte Doppelbrechung und Kompaktierung des Quarzglases aus.

Es hat sich als besonders vorteilhaft erwiesen, wenn die Trocknungsatmosphäre Helium und Ozon enthält.

Helium diffundiert in Quarzglas besonders schnell, so dass die Gefahr einer Blasenbildung beim Verglasen durch eingeschlossene Gase verringert ist. Außerdem zeichnet sich Helium durch eine sehr gute Wärmeleitfähigkeit aus, so dass die zum Trocknen notwendigen Zeitspannen und Temperaturen vergleichsweise gering sind. Wichtig ist auch, dass sich Helium auch gegenüber Ozon inert verhält, und sich deshalb auf die Reaktivität dieses Trocknungsmittels nicht ungünstig auswirkt.

Ozon ist thermodynamisch instabil und zerfällt leicht - auch explosionsartig - zu Sauerstoff. Es hat sich jedoch überraschend gezeigt, dass auch geringe Ozonkonzentrationen in der Trocknungsatmosphäre - insbesondere in Verbindung mit einer Heliumatmosphäre, hohen Trocknungstemperaturen und im Spülbetrieb - eine effektive Beseitigung von Hydroxylgruppen aus dem Sootkörper bewirken. Vorzugsweise beträgt der Ozongehalt in der Trocknungsatmosphäre zwischen 1,5 und 5 Vol.-%.

Es hat sich besonders bewährt, wenn das Verglasen des Sootkörpers gemäß Verfahrensschritt (c) in einer ozonhaltigen Atmosphäre erfolgt.

Die höhere Temperaturen beim Verglasen des Sootkörpers fördern die durch Ozon unterstützte Reduzierung des Hydroxylgruppengehalts des Sootkörpers. Darüber hinaus verhindert oder vermindert das in der Verglasungsatmosphäre vorhandene Ozon aufgrund seiner oxidativen Wirkung - wie oben anhand der Trocknung bereits erläutert - weiterhin die Entstehung von Sauerstofffehlstellen, die bei der thermisch induzierten Abspaltung von Hydroxylgruppen aus dem SiO₂-Glasnetzwerk entstehen.

In einer besonders bevorzugten Verfahrensweise wird der Sootkörper in direktem Anschluss an die Dehydratationsbehandlung verglast, wobei die Atmosphäre beim Verglasen Ozon und Helium enthält.

Die Atmosphäre beim Verglasen unterscheidet sich somit von der bevorzugten Atmosphäre beim Trocknen nicht oder nicht wesentlich. Dadurch werden die bekanntlich mit einem Wechsel der Atmosphäre einhergehenden Nachteile vermieden, wie zum Beispiel die Zeitspanne für den vollständigen Gasaustausch, der kaum reproduzierbare Einfluss vorhandener Restgase, die Zeitspanne zur Einstellung des thermischen und chemischen Gleichgewichts in der neuen Atmosphäre und dergleichen. Die Dehydratationsbehandlung und das anschließende Verglasen des Sootkörpers werden in unterschiedlichen Öfen, vorzugsweise jedoch im selben Ofen durchgeführt, da hierbei Kontaminationen des getrockneten Sootkörpers und insbesondere eine Rekontamination mit Hydroxylgruppen einfach vermeiden werden können.

Eine weitere Verbesserung hinsichtlich der Effizienz der Trocknung ergibt sich, wenn das Ozon unmittelbar vor seinem Einsatz mittels eines Ozongenerators erzeugt wird.

Diese Verfahrensweise trägt außerdem der geringen Stabilität von Ozon Rechnung und gilt sowohl für die Dehydratationsbehandlung als auch für die Verglasung des Sootkörpers.

Es hat sich außerdem bewährt, wenn der Atmosphäre auch beim Verglasen des Si-O₂-Sootkörpers keine Halogene zugeführt werden.

Dadurch werden auch beim Verglasen des Sootkörpers keine Halogene in das Quarzglas eingebaut, so dass die mit Halogenen einhergehenden, oben erläuterten Nachteile hinsichtlich der Beeinträchtigung der UV-Strahlenbeständigkeit vermieden werden.

Es wird eine Verfahrensweise bevorzugt, bei der der Sootkörper zumindest zu Beginn der Trocknungsphase eine Dichte im Bereich zwischen 20 % und 30 % der Dichte von Quarzglas aufweist.

Bei einer Dichte von mehr als 30 % ergibt sich eine lange Behandlungsdauer für die Dehydratationsbehandlung des Sootkörpers. Sootkörper mit einer Dichte unterhalb von 20% der Dichte von Quarzglas sind mechanisch wenig stabil und daher schwer handhabbar.

Es hat sich als besonders günstig erwisen, wenn die Trocknungstemperatur im Bereich zwischen 1200 °C und 1350 °C, vorzugsweise bei maximal 1300 °C, liegt.

Dieser Temperatbereich repräsentiert ein Optimum im Hinblick auf eine möglichst kurze und effiziente Trocknungsdauer.

Nachfolgend wird die Erfindung anhand eines Ausführungsbeispiels nähr erläutert.

### Beispiel

Durch Flammenhydrolyse von SiCl₄ werden in der Brennerflamme eines Abscheidebrenners SiO₂-Sootpartikel gebildet und mittels des OVD-Verfahrens auf einem um seine Längsachse rotierenden Trägerstab unter Bildung eines Sootkörpers aus porösem SiO₂ schichtweise abgeschieden. Nach Beendigung des Abscheideverfahrens wird der Trägerstab entfernt. Aus dem so erhaltenen Sootrohr mit einer Wandstärke von 110 mm, einer Dichte von etwa 25 % der Dichte von Quarzglas und mit einem Hydroxylgruppengehalt von etwa 400 Gew.-ppm wird ein Zylinder aus transparentem Quarzglas anhand des nachfolgend beispielhaft erläuterten Verfahrens hergestellt:
Das Sootrohr wird zum Entfernen der herstellungsbedingt eingebrachten Hydroxylgruppen einer Dehydratationsbehandlung unterzogen. Hierzu wird das Sootrohr in vertikaler Ausrichtung in einen Dehydratations- und Verglasungsofen eingebracht und bei einer Temperatur um 1200 C im Spülverfahren in einer Atmosphäre behandelt, die aus Helium mit 3 Vol.-% Ozon besteht. Die Behandlungsdauer beträgt 96 h. Während der Dehydratationsbehandlung werden dem Dehydratations- und Verglasungsofen keine Halogene zugeführt.

Anschließend wird das so vorbehandelte Sootrohr innerhalb desselben Ofens zu einem Körper aus transparentem Quarzglas in einer Atmosphäre gesintert (verglast), die - wie bei der Dehydratationsbehandlung - aus Helium mit 3 Vol.-% Ozon besteht. Die Temperatur des Heizelements wird auf 1600°C voreingestellt, wodurch sich auf der Oberfläche des Sootrohres eines Maximaltemperatur von etwa 1580°C einstellt. Dabei wandert eine Schmelzfront über die gesamte Länge des Sootrohres von außen nach innen. Auch während des Sinterens werden dem Dehydratations- und Verglasungsofen keine Halogene zugeführt.

Anschließend wird der Hydroxylgruppengehalt über die gesamte Rohrlänge des verglasten Rohres spektroskopisch ermittelt. Es ergab sich ein mittlerer Hydroxylgruppengehalt von 30 Gew.-ppm. Das Quarzglas ist chlorfrei und auch frei von anderen Halogenen.

Der Hydroxylgruppengehalt des verglasten Rohres ergibt sich durch Messung der IR-Absorption nach der Methode von D. M. Dodd et al. ("Optical Determinations of OH in Fused Silica", (1966), S. 3911).

Das verglaste Quarzglasrohr wird anschließend mittels der allgemein üblichen Umform- und Homogenisierungsprozesse zu einem Vollzylinder mit einem Außendurchmesser von 300 mm und eine Höhe von 80 mm verarbeitet. Dieser dient als Linsenrohling für ein Projektionsobjektiv, das sich durch eine hohe Transparenz im kurzwelligen UV-Bereich und durch hohe UV-Strahlenbeständigkeit auszeichnet und das für den Einsatz in der Mikrolithographie geeignet ist.

### Vergleichsbeispiel

Mittels Außenabscheidung wird ein Sootrohr mit den Abmessungen und einer Dichte von etwa 25 % der Dichte von Quarzglas hergestellt, wie oben anhand Beispiel 1 beschrieben. Das Sootrohr wird einer Dehydratationsbehandlung unter Einsatz von Chlor unterzogen. Hierzu wird das Sootrohr in vertikaler Ausrichtung in einen Dehydratations- und Verglasungsofen eingebracht und zunächst bei einer Temperatur um 900°C in einer chlorhaltigen Atmosphäre behandelt. Die Behandlungsdauer beträgt 3 h.

Anschließend wird das so vorbehandelte Sootrohr im selben Ofen verglast, wobei die Temperatur des Heizelements auf 1600°C voreingestellt wird. Auf der Oberfläche des Sootrohres stellt sich eines Maximaltemperatur von etwa 1580°C ein.

Der Hydroxylgruppengehalt des verglasten Rohres wurde ermittelt, wie oben anhand Beispiel 1 beschrieben. Es wurde ein mittlerer OH-Gehalt von 30 Gew.-ppm gemessen.

Das gesinterte (verglaste) Quarzglasrohr wurde anschließend mittels der allgemein üblichen Umform- und Homogenisierungsprozesse zu einem Vollzylinder mit einem Außendurchmesser von 300 mm und eine Höhe von 80 mm verarbeitet. Das Quarzglas zeigte bei Bestrahlung mit UV-Laserstrahlung einer Wellenlänge von 193 nm ein Maß an induzierter Doppelbrechung und Kompaktierung, die es für einen Einsatz mit besonders hohen Anforderungen an die UV-Strahlenbeständigkeit als ungeeignet erscheinen lassen, und der offensichtlich auf einen noch vorhandenen Gehalt an Chlor im Quarzglas zurückzuführen ist.

## Patentansprüche

1. Verfahren zur Herstellung von synthetischem Quarzglas mit vorgegebenem Hydroxylgruppengehalt, umfassend die folgenden Verfahrensschritte
(a) durch Flammenhydrolyse oder Oxidation einer siliziumhaltigen Ausgangsverbindung und schichtweises Abscheiden von SiO₂-Partikeln auf einem rotierenden Träger wird ein poröser SiO₂-Sootkörper hergestellt,
(b) der Sootkörper wird zum Entfernen von Hydroxylgruppen einer Dehydratationsbehandlung in einer ein Reaktionsgas enthaltenden Trocknungsatmosphäre bei einer Trocknungstemperatur unterzogen, und
(c) der SiO₂-Sootkörper wird zu einem Körper aus dem synthetischen Quarzglas verglast,
**dadurch gekennzeichnet, dass** die Dehydratationsbehandlung gemäß Verfahrensschritt (b) eine Trocknungsphase umfasst, während der als Reaktionsgas Ozon eingesetzt wird, und dass der Ozongehalt der Trocknungsatmosphäre zwischen 0,5 und 10 Vol.-% beträgt, wobei der Trocknungsatmosphäre keine Halogene zugeführt werden und die Trocknungstemperatur im Bereich zwischen 1200 °C und 1400 °C liegt.

2. Verfahren nach Anspruch 1, **dadurch gekennzeichnet, dass** die Trocknungsatmosphäre Helium und Ozon enthält.

3. Verfahren nach Anspruch 1 oder 2, **dadurch gekennzeichnet, dass** der Ozongehalt der Trocknungsatmosphäre zwischen 1,5 und 5 Vol.-% beträgt.

4. Verfahren nach einem der vorhergehenden Ansprüche, **dadurch gekennzeichnet, dass** das Verglasen des Sootkörpers gemäß Verfahrensschritt (c) in einer ozonhaltigen Atmosphäre erfolgt.

5. Verfahren nach Anspruch 4, **dadurch gekennzeichnet, dass** der Sootkörper in direktem Anschluss an die Dehydratationsbehandlung verglast wird, wobei die Atmosphäre beim Verglasen Ozon und Helium enthält.

6. Verfahren nach einem der vorhergehenden Ansprüche, **dadurch gekennzeichnet, dass** das Ozon unmittelbar vor seinem Einsatz mittels eines Ozongenerators erzeugt wird.

7. Verfahren nach einem der vorhergehenden Ansprüche, **dadurch gekennzeichnet, dass** der Atmosphäre beim Verglasen des SiO₂-Sootkörpers keine Halogene zugeführt werden.

8. Verfahren nach einem der vorhergehenden Ansprüche, **dadurch gekennzeichnet, dass** der Sootkörper zumindest zu Beginn der Trocknungsphase eine Dichte von maximal 30 % der Dichte von Quarzglas aufweist.

9. Verfahren nach einem der vorhergehenden Ansprüche, **dadurch gekennzeichnet, dass** die Trocknungstemperatur im Bereich zwischen 1200 °C und 1350 °C, vorzugsweise bei maximal 1300 °C, liegt.

## Claims

1. A method for producing synthetic quartz glass with a predetermined hydroxyl group content, the method comprising the following steps:
(a) producing a porous SiO₂ soot body by flame hydrolysis or oxidation of a silicon-containing start compound and by layerwise deposition of SiO₂ particles on a rotating support;
(b) subjecting the soot body to a dehydration treatment in drying atmosphere containing a reaction gas at a drying temperature so as to remove hydroxyl groups; and
(c) vitrifying the SiO₂ soot body into a body consisting of the synthetic quartz glass,
**characterized in that** the dehydration treatment according to method step (b) comprises a drying phase during which the reaction gas is ozone, wherein th drying atmosphere has an ozone content that is between 0.5% by vol. and 10% by vol., and the drying temperature is chosen in the range between 1200°C and 1400°C, and wherein no halogens are supplied to the drying atmosphere.

2. The method according to claim 1, wherein in that the drying atmosphere contains helium and ozone.

3. The method according to claim 1 or 2, wherein in that the ozone content of the drying atmosphere is between 1.5% by vol. and 5% by vol.

4. The method according to any of the preceding claims, wherein in that vitrification of the soot body according to method step (c) is carried out in an ozone-containing atmosphere.

5. The method according to claim 4, wherein in that the soot body is vitrified directly following the dehydration treatment, the atmosphere containing ozone and helium during vitrification.

6. The method according to any of the preceding claims, wherein in that the ozone directly before use thereof is generated by an ozone generator.

7. The method according to any of the preceding claims, wherein in that there is no halogens rs supplied to the atmosphere during vitrification of the SiO₂ soot body.

8. The method according to any of the preceding claims, wherein in that at least at the beginning of the drying phase the soot body has a density of not more than 30% of the density of quartz glass.

9. The method according to any of the preceding claims, wherein in that the drying temperature is chosen in the range between 1200°C and 1350°C, preferably at most 1300 °C.

## Revendications

1. Procédé pour la fabrication de verre de quartz synthétique avec une teneur en groupes hydroxyles prédéterminés, comprenant les étapes de procédé suivantes :
(a) un corps de suie SiO₂ poreux est fabriqué par hydrolyse à la flamme ou oxydation d'un composé de départ contenant du silicium et dépôt de couche de particules SiO₂ sur un substrat rotatif,
(b) le corps de suie est soumis pour le retrait de groupes hydroxyles à un traitement de déshydratation dans une atmosphère de séchage contenant un gaz réactif à une température de séchage et
(c) le corps de suie SiO₂ est vitrifié en un corps de verre de quartz synthétique,
**caractérisé en ce que** le traitement de déshydratation comprend selon l'étape de procédé (b) une phase de séchage pendant laquelle l'ozone est utilisé comme gaz réactif et **en ce que** la teneur en ozone de l'atmosphère de séchage est comprise entre 0,5 et 10 % vol, l'atmosphère de séchage ne recevant aucune halogénures et la température de séchage étant comprise entre 1200°C et 1400°C.

2. Procédé selon la revendication 1, **caractérisé en ce que** l'atmosphère de séchage content de l'hélium et de l'ozone.

3. Procédé selon la revendication 1 ou 2, **caractérisé en ce que** la teneur en ozone de l'atmosphère de séchage est comprise entre 1,5 et 5 % vol.

4. Procédé selon l'une des revendications précédentes, crac que la vitrification du corps de sui s'effectue conformément à l'étape de procédé (c) dans une atmosphère contenant de l'ozone.

5. Procédé selon la revendication 4, **caractérisé en ce que** le corps de suie est vitrifié juste après le traitement de déshydratation, l'atmosphère de vitrification contenant de l'ozone et de l'hélium.

6. Procédé selon l'une des revendications précédentes, **caractérisé en ce que** l'ozone est produit juste avant son utilisation au moyen d'un générateur d'ozone.

7. Procédé selon l'une des revendications précédentes, **caractérisé en ce que** lors de la vitrification du corps de suie Si02, l'atmosphère n'es pas alimenté en halogénures.

8. Procédé selon l'une des revendications précédentes, crac que le corps de suie présente au moins au début de la phase de séchage une densité de maximale 30 % de la densité du verre de quartz.

9. Procédé selon l'une des revendications précédentes, crac que la température de séchage est comprise entre 1200°C et 13500°C, de préférence maximale 1300°C.
